# EUROPÄISCHE PATENTANMELDUNG

(11) **EP 1 688 762 A2**
(43) Veröffentlichungstag der Anmeldung: **09.08.2006**
(21) Anmeldenummer: 06001546.8
(22) Anmeldetag: 25.01.2006
(51) Int. Cl.: G01V 1/22

(54) **Erkundungsvorrichtung und Verfahren zur Registrierung seismischer Schwingungen**

(30) Priorität: 02.02.2005 DE 102005004869
(71) Anmelder: GeoForschungsZentrum Potsdam, 14473 Potsdam (DE)
(72) Erfinder: Groh, Marco, 14478 Potsdam (DE); Krüger, Kay, 14469 Potsdam (DE); Giese, Rüdiger, 14715 Milower Land (DE)
(74) Vertreter: Hertz, Oliver

(57) **Zusammenfassung**

Die Erfindung betrifft eine Erkundungsvorrichtung (1) zur Registrierung seismischer Schwingungen, wobei an mehreren Messstellen (10, 20) Daten erfasst werden, die anschließend an eine Basisstation (50) übertragen werden. Es wird vorgeschlagen, dass die Triggerung von der Basisstation (50) zu den Messstellen (10, 20) drahtlos über einen ersten Übertragungsweg und die Datenübertragung von den Messstellen (10, 20) zu der Basisstation (50) über einen zweiten Übertragungsweg erfolgt.

## Beschreibung

Die Erfindung betrifft eine Erkundungsvorrichtung und ein Erkundungsverfahren zur Registrierung seismischer Schwingungen gemäß dem Oberbegriff der nebengeordneten Ansprüche.

Bei der Durchführung geophysikalischer Untersuchungen werden künstliche, z. B. durch Explosionen erzeugte Schwingungen, dazu verwendet, den Aufbau der Erdkruste zu erfassen. Die künstlich erzeugten Schwingungen werden dabei entfernt von dem Ursprungsort der Schwingungserzeugung an mehreren Messstellen, beispielsweise mit Geofonen, aufgenommen. Um bei einer späteren Auswertung die Ergebnisse der einzelnen Messstellen miteinander vergleichen zu können, müssen die Messungen synchronisiert (zeitlich abgestimmt) erfolgen, insbesondere um Laufzeitunterschiede feststellen zu können. Hierzu ist eine Triggerung der Messstellen erforderlich. Weiterhin müssen die an den Messstellen gesammelten Daten wieder zentral zusammengeführt werden, um eine zentrale Auswertung zu ermöglichen.

In EP 0 934 538 B1 wird ein Verfahren zur Datenerfassung bei einer geophysikalischen Untersuchung offenbart, bei dem an einer Messstelle ein Steuerungsschaltkreis vorgesehen ist, der digital und drahtlos mit einer Basisstation kommuniziert, wobei der Basisstation Informationen über den Standort der Messstelle übermittelt, mit der Basisstation die Synchronisation einer Messung digital und drahtlos abgestimmt und Daten sowohl von der Basisstation zur Messstelle als auch von der Messstelle zur Basisstation übertragen werden.

Das herkömmliche System hat den Nachteil, dass es technisch aufwendig ist und außerdem Daten an den Messstellen bereitgehalten werden müssen, welche die Position der Messstellen beschreiben. Außerdem ist die Ermittlung dieser Standortdaten der Messstellen aufwendig und unter Tage beispielsweise mit GPS nicht möglich.

Der Erfindung liegt die Aufgabe zu Grunde, bei einer geophysikalischen Untersuchung die Steuerung der Messstellen zu verbessern, wobei die verbesserte Steuerung insbesondere eine vereinfachte und zuverlässige Möglichkeit zur Synchronisation der Messstellen bereitstellen soll.

Die Aufgabe wird durch die kennzeichnenden Merkmale der nebengeordneten Ansprüche gelöst.

Die Erfindung geht von der Erkenntnis aus, dass bei einer direkten drahtlosen Triggerung zur Synchronisation der Datenerfassung eine schnelle und zuverlässige Möglichkeit zur Synchronisation der Messstellen geschaffen werden kann. Erfindungsgemäß erfolgt die Triggerung über einen ersten Übertragungsweg von der Basisstation direkt zu den Messstellen und die Übertragung der erfassten Daten von den Messstellen an die Basisstation über einen zweiten Übertragungsweg. Die Trennung der Übertragungswege geht von der Erkenntnis aus, dass die Anforderungen an die Signalübertragung bei der Triggerung sich deutlich von den Anforderungen an die Signalübertragung bei der Übertragung der erfassten Daten unterscheiden. Zur Triggerung wird im einfachsten Fall lediglich ein einzelner Impuls benötigt, dessen Übertragung jedoch sicher erfolgen muss, da eine Fehlerabfrage zu Verzögerungen führen würde. Im Gegensatz dazu wird für die Übertragung der erfassten Daten eine möglichst hohe Bandbreite erwünscht, um die Übertragung der erfassten Daten in einer möglichst kurzen Zeitspanne bewerkstelligen zu können. Hierbei können zugunsten einer schnelleren Datenübertragungsrate auch Fehlerkorrekturmechanismen eingesetzt werden, da eine Nachfrage ohne Beeinträchtigung der seismischen Untersuchung möglich ist.

Vorzugsweise umfasst der erste Übertragungsweg eine direkte Funkverbindung zwischen einem direkt mit der Basisstation verbundenen Sender und mehreren direkt mit den Messstellen verbundenen Empfängern. Hierbei bedeutet eine direkte Funkverbindung, dass zwischen dem Sender und den an den Messstellen angeordneten Empfängern keine Relaisstationen oder vergleichbares eingesetzt wird, sondern die Empfänger direkt das Signal des Senders empfangen. Die direkte Funkverbindung bietet den Vorteil, dass abgesehen von der vernachlässigbaren Laufzeit der elektromagnetischen Strahlung auf der Funkstrecke zwischen dem Sender der Basisstation und den Empfängern der Messstellen keine weiteren Zeitverzögerungen auftreten. Vorzugsweise ist die Funkverbindung eine analoge Funkverbindung, d.h. der Sender und die Empfänger arbeiten mit analoger Funktechnik, wobei beispielsweise ein amplitudenmoduliertes oder ein frequenzmoduliertes analoges Signal übertragen wird. Analoge Funktechnik bietet den Vorteil, dass auf eine Taktung, wie sie bei digitaler Funktechnik üblich ist, verzichtet werden kann, wodurch Zeitverzögerungen, die durch die Taktung entstehen können, vermieden werden.

Vorteilhafterweise erfolgt über den ersten Übertragungsweg eine Auslösung einer Anregung seismischer Schwingungen, beispielsweise durch eine Sprengung. Dies bietet den Vorteil, dass mit dem ersten Übertragungsweg zwei Funktionen ausgelöst werden können: die Triggerung der Datenerfassung und die Auslösung der Anregung. Vorzugsweise umfasst die erfindungsgemäße Erkundungsvorrichtung einen mit einer Anregungsvorrichtung verbundenen Auslösempfänger, der in direkter Funkverbindung mit dem Sender der Basisstation steht. Dies bietet den Vorteil, dass die Anregungsvorrichtung, die beispielsweise eine Sprengladung sein kann, in direkter Verbindung mit der Basisstation steht, und direkt ausgelöst werden kann, d.h. beispielsweise gezündet. Der mit der Anregungsvorrichtung verbundene Auslöseempfänger kann analoge Funktechnik aufweisen, um ein analoges Signal von dem Sender empfangen zu können.

Vorzugsweise weist der zweite Übertragungsweg eine digitale Funkverbindung auf, da eine digitale Funkverbindung vorteilhafterweise mit Fehlerabfragesystemen ausgestattet werden kann, die eine schnelle Übertragung einer großen Datenmenge fehlerfrei gewährleisten können.

Vorteilhafterweise wird für die Übertragung auf dem zweiten Übertragungsweg von den Messstellen an die Basisstation ein zellulares Funknetz verwendet, das über Vermittlungsstellen verfügt. Die Vermittlungsstellen sammeln jeweils Daten von mehreren Messstellen und übertragen diese dann an die Basisstation. Auf diese Weise ist es möglich, in den einzelnen Zellen des Funknetzes wiederholt eine gleiche Frequenz zur Datenübertragung zu nutzen. Vorteile ergeben sich jedoch auch, wenn die Daten von den Messstellen an die Basisstation direkt drahtlos übertragen werden. Dabei heißt eine direkte Übertragung, dass auf zusätzliche Vermittlungsstellen verzichtet wird. Der Vorteil dabei ist, dass keine zusätzlichen Vermittlungsstellen erforderlich sind.

Vorteilhafterweise wird die Datenerfassung an den Messstellen unter Tage, zum Beispiel in einem Tunnel oder einem Bergwerks-Bauwerk, durchgeführt. Unter Tage bietet die Erfindung aus mehreren Gründen besondere Vorteile. So ist beispielsweise beim Tunnelbau insbesondere beim Einsatz einer Tunnelbohrmaschine die Verlegung von Kabelverbindungen schwierig. Daher ist die erfindungsgemäße Vorrichtung mit zwei drahtlosen Übertragungswegen zur Triggerung und Datenübertragung mit dem Vorteil verbunden, dass zwischen den Messstellen und der Basisstation keine Kabelverbindungen benötigt werden. Unter Tage ist die Triggerung über eine direkte analoge Funkverbindung mit dem besonderen Vorteil verbunden, dass für die analoge Funkverbindung niedrige Frequenzen verwendet werden können, da nicht die Übertragung von Daten mit einer hohen Bandbreite notwendig ist. Daher können für den ersten Übertragungsweg zur Triggerung Frequenzen verwendet werden, die beispielsweise geringer sind als 900 MHz oder sogar geringer als 1 MHz. Die Verwendung solch niedriger Frequenzen bietet weiterhin den Vorteil, dass auch unter Tage eine sichere Übertragung möglich ist. Auch die Übertragung der Daten über den zweiten Übertragungsweg zur Datenübertragung bietet insbesondere bei Verwendung von Vermittlungsstellen besondere Vorteile, da unter Tage bei den im Digitalfunk verwendeten hohen Frequenzen nur kurze Übertragungsstrecken möglich sind, falls eine geringe Senderleistung verwendet werden soll. So kann beispielsweise beim Einsatz einer Tunnelbohrmaschine an der Tunnelbohrmaschine eine Vermittlungsstelle angeordnet werden, die den Vorteil bieten kann, dass sie in unmittelbarer Nähe zu den Messstellen liegt. Von dieser Vermittlungsstelle aus kann dann die Datenübertragung weiter zu einer Basisstation erfolgen, die an einem anderen Ort im Tunnel oder am Tunneleingang angeordnet ist.

Vorzugsweise wird an einer Messstelle in Reaktion auf eine Triggerung mit der Datenerfassung begonnen, wobei die Datenerfassung anschließend für einen vorher bestimmten Zeitraum fortgesetzt wird. Auf diese Weise ist es möglich, durch ein einzelnes Triggersignal eine Messung für einen bestimmten Zeitraum auszulösen. Weitere Vorteile ergeben sich, falls der Zeitraum drahtlos festgelegt werden kann, beispielsweise durch eine Übertragung einer Signal-codierten Vorgabe für den bestimmten Zeitraum zusammen mit dem Triggersignal. Dies bietet den Vorteil, dass die Datenerfassung flexibel an unterschiedliche Bedingungen angepasst werden kann. Der Beginn der Datenerfassung erfolgt dabei vorzugsweise unmittelbar nach der Triggerung, um unnötige Verzögerungen zu vermeiden. Alternativ kann die Datenerfassung aber auch definiert zeitlich versetzt beginnen, falls dies Vorteile bei der konkreten Anwendung der Erfindung bietet. Der Zeitpunkt des Beginns der Datenerfassung kann allgemein in Bezug auf eine zur weiteren Datenverarbeitung eingesetzte Technik abgestimmt werden.

Vorzugsweise wird an der Messstelle ein Speicher zum Speichern von erfassten Daten angeordnet. Ein solcher Speicher bietet den Vorteil, dass an der Messstelle erfasste Daten zwischengespeichert werden können. Der Speicher kann ein allgemein üblicher digitaler Speicherbaustein zum Speichern von digitalisierten Messwerten sein, die an der Messstelle erfasst werden.

Vorteilhafterweise werden eine oder mehrere Messwertreihen in dem Speicher zwischengespeichert und anschließend an die Basisstation übertragen. Dies bietet den Vorteil, dass die Basisstation komplette Messwertreihen erhält, wodurch die Weiterverarbeitung vereinfacht wird. Besondere Vorteile ergeben sich, wenn mehrere Messwertreihen gemeinsam übertragen werden, da dadurch nicht zwischen einzelnen Messungen auf die Übertragung der vorhergehend aufgenommenen Messwertreihe gewartet werden muss. Der Speicher weist daher vorzugsweise eine ausreichende Größe auf, um mehrere Messwertreihen zu speichern.

Vorzugsweise ist zumindest eine der Messstellen Teil eines Geofonankers. Geofonanker bieten den Vorteil, dass sie zusätzlich zur Stabilisierung des Gesteins die Möglichkeit bieten, an einer entfernten Stelle im Gestein Messdaten aufnehmen zu können. Vorzugsweise werden dabei an der Ankerspitze drei Geofone mit je einem Kanal angeordnet, um Beschleunigungen und Verschiebungen an der Stelle der Geofone in allen drei Raumrichtungen aufnehmen zu können.

Ein unabhängiger Gegenstand der Erfindung ist ein Geofonanker mit mindestens einem Geofon und einem analogen Empfänger zum Empfang des Triggersignals und einer digitalen Einheit, die eine Datenverarbeitung der aufgenommenen Messdaten vornimmt, einem Speicher zum Zwischenspeichern von Daten und einem Sender, der Digitaltechnik verwendet zur Übertragung der digitalisierten Messdaten, die in dem Speicher zwischengespeichert wurden.

Für die digitale Übertragung der Messdaten kann ein im Stand der Technik bekanntes W-LAN verwendet werden, das den Vorteil bietet, dass eine zuverlässige und bereits entwickelte Technik zur Datenübertragung verwendet werden kann.

Vorzugsweise werden zur Datenübertragung Frequenzen verwendet, die oberhalb von 2 GHz liegen, da bei hohen Frequenzen eine größere Bandbreite zur Übertragung verwendet werden kann. Dadurch kann die Übertragungsgeschwindigkeit gesteigert werden.

Die Erfindung wird nachfolgend unter Bezugnahme auf die beigefügten Figuren näher beschrieben.
- Figur 1: zeigt schematisch eine erfindungsgemäße Erkundungsvorrichtung zur Registrierung seismischer Schwingungen.
- Figur 2: zeigt eine der in Figur 1 dargestellten Messstellen der Erkundungsvorrichtung mit weiteren Einzelheiten.
- Figur 3: zeigt ein Verfahren zum Betrieb der in den Figuren 1 und 2 gezeigten Vorrichtung.

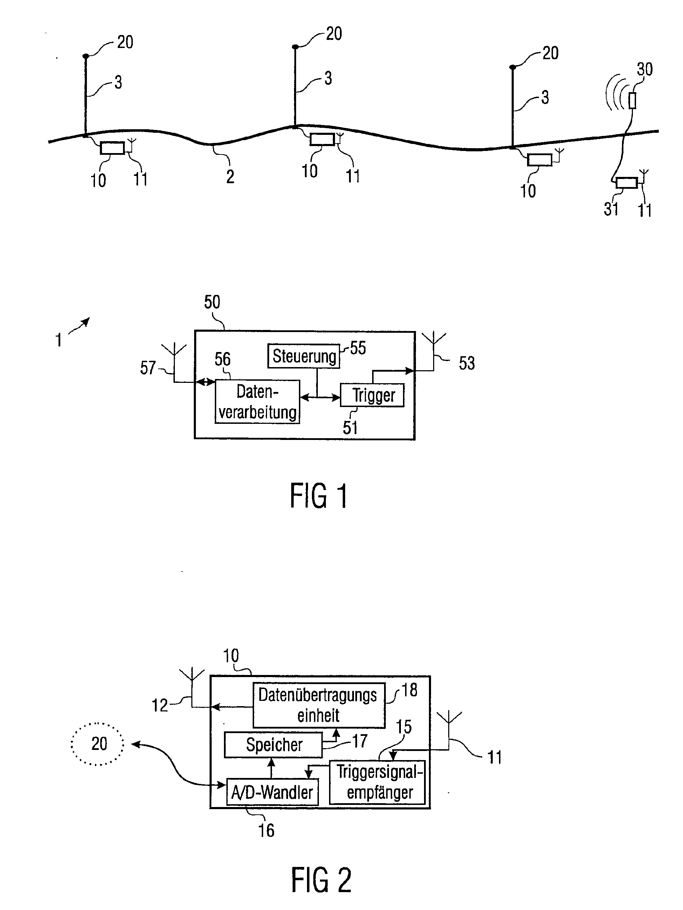

In Figur 1 ist eine erfindungsgemäße Erkundungsvorrichtung 1 dargestellt. In einer Wand 2 (z.B. Decke) eines Untertagestollens sind Geofonanker 3 angeordnet, die stollenseitig mit jeweils einem Anschlusskabel an jeweils eine Datenerfassungseinheit 10 angeschlossen sind. Die Datenerfassungseinheit 10 umfasst zwei Antennen, von denen in Figur 1 lediglich eine Triggersignalempfangsantenne 11 dargestellt ist. Die Datenerfassungseinheit 10 erfasst Daten, die mit drei Geofonen 20 an der Spitze des Geofonankers 3 gemessen werden. Die dargestellten Geofone 20 messen Schwingungen, die z.B. durch die Sprengung einer Sprengladung 30 an einer entfernten Stelle im Gestein erzeugt werden. Die Sprengladung ist mit einem Sprengungsauslöser 31 verbunden, der wie die Datenerfassungseinheit 10 eine Triggersignalempfangsantenne 11 aufweist.

Zu der in Figur 1 dargestellten Erkundungsvorrichtung 1 gehört außerdem eine Basisstation 50. Die Basisstation 50 steuert die Sprengung der Sprengladung 30 und die Datenerfassung von den Datenerfassungseinheiten 10. Im Einzelnen ist in der Basisstation ein Trigger 51 vorgesehen, der über ein gesendetes Triggersignal die Datenerfassungseinheiten 10 und den Sprengungsauslöser 31 triggert. Zur Aussendung des Triggersignals verfügt die Basisstation 50 über eine Triggersignalsendeantenne 53. Das Triggersignal wird von den Triggersignalempfangsantennen 11 empfangen und an die Datenerfassungseinheiten 10 und den Sprengungsauslöser 31 weitergeleitet.

Außerdem sind in der Basisstation 50 eine zentrale Steuereinheit 55 und eine Datenverarbeitungseinheit 56 angeordnet. Die Steuereinheit 55 steuert zentral alle Prozesse der Basisstation 50, d.h. insbesondere den Trigger 51 und die Datenverarbeitungseinheit 56. Die Datenverarbeitungseinheit 56 ist mit einer Datenübertragungsantenne 57 verbunden, die dazu geeignet ist, von den Datenerfassungseinheiten 10 erfasste und gesendete Daten zu empfangen. Weiterhin kann über die Übertragungsantenne 57 ein Bestätigungssignal an die Datenerfassungseinheiten 10 gesendet werden, wenn die Übertragung von Daten von den Datenerfassungseinheiten 10 an die Basisstation 50 erfolgreich war.

In Figur 2 ist die Datenerfassungseinheit 10 mit weiteren Einzelheiten dargestellt. In Figur 2 bezeichnen gleiche Bezugszeichen gleiche Teile wie in Figur 1. Die Datenerfassungseinheit 10 empfängt über die Triggersignalempfangsantenne 11 das Triggersignal, das vom Triggersignalempfänger 15 verarbeitet wird. Der Triggersignalempfänger 15 steuert einen A/D-Wandler 16 an, der daraufhin Messwerte, die mit dem Geofon 20 aufgenommen werden, in digitale Daten umwandelt, die er in einem Speicher 17 ablegt. Nachdem eine Messwertreihe aufgenommen wurde, wird der Speicher 17 von einer Datenübertragungseinheit 18 ausgelesen, welche die erfassten Daten über eine Messstellen-Datenantenne 12 an die Basisstation 50 übermittelt. Zusätzlich oder alternativ kann der Speicher 17 die Daten auch weiterhin speichern, beispielsweise für einen späteren Ausleseprozess.

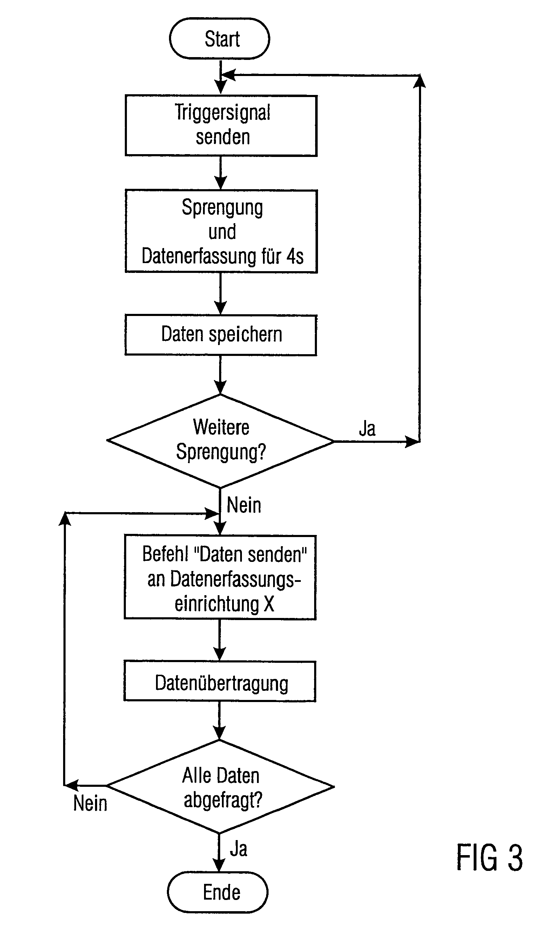

In der Figur 3 ist ein Verfahren zum Betrieb der in den Figuren 1 und 2 dargestellten erfindungsgemäßen Vorrichtung gezeigt. Nach dem Start des Verfahrens wird ein Triggersignal drahtlos an den Sprengsatz und an die Datenerfassungseinheiten übertragen. Anschließend erfassen die Datenerfassungseinheiten Messwerte der Geofone, wobei für eine vorgegebene Zeit von z.B. vier Sekunden Daten aufgezeichnet werden. Die Datenerfassung erfolgt an jeder der Datenerfassungseinheiten. Die Daten werden jeweils in den Datenerfassungseinheiten zwischengespeichert. Anschließend warten die Datenerfassungseinheiten auf einen Befehl der Basisstation, wobei anschließend entweder eine weitere Sprengung mit Datenerfassung oder ein Auslesen der Daten durch die Basisstation erfolgt. Falls keine Sprengung mehr vorgesehen ist, sendet die Basisstation ein Signal aus, mit dem sie die erste der Datenerfassungseinheiten dazu auffordert, die von ihr erfassten Daten zu übertragen. Anschließend werden die von der ersten Datenerfassungseinheit erfassten Daten an die Basisstation übertragen. Dieser Vorgang wird für jede der Datenerfassungseinheiten wiederholt. Falls alle Datenerfassungseinheiten ausgelesen wurden, wird das Verfahren beendet. Es ist nun möglich, das Verfahren zur Aufnahme weiterer Messwertreihen erneut zu starten.

Die Erfindung ist nicht auf das vorstehend beschriebene Ausführungsbeispiel und das beschriebene Verfahren beschränkt, sondern umfasst auch andere Vorrichtungen und Verfahren, soweit diese von den Ansprüchen umfasst sind.

## Patentansprüche

1. Erkundungsverfahren zur Registrierung seismischer Schwingungen, mit den Schritten:
- Datenerfassung zur Aufnahme von Daten, welche die seismischen Schwingungen an mehreren Messstellen (10, 20) wiedergeben, wobei eine Triggerung der Datenerfassung durch eine Basisstation (50) vorgesehen ist, und
- Übertragung der erfassten Daten an die Basisstation (50),
**dadurch gekennzeichnet, dass**
- die Triggerung drahtlos über einen ersten Übertragungsweg (11, 15, 53) von der Basisstation (50) direkt zu den Messstellen (10, 20) erfolgt, und
- die Übertragung der erfassten Daten an die Basisstation (50) über einen zweiten Übertragungsweg (12, 18, 57) erfolgt.

2. Erkundungsverfahren nach Anspruch 1, **dadurch gekennzeichnet, dass** der erste Übertragungsweg (11, 15, 53) eine analoge Funkverbindung umfasst.

3. Erkundungsverfahren nach einem der vorhergehenden Ansprüche, **dadurch gekennzeichnet, dass** der zweite Übertragungsweg (12, 18, 57) eine digitale Funkverbindung umfasst.

4. Erkundungsverfahren nach Anspruch 3, **dadurch gekennzeichnet, dass** die Übertragung der erfassten Daten über den zweiten Übertragungsweg in einem zellularen Funknetz über mindestens eine Vermittlungsstelle erfolgt.

5. Erkundungsverfahren nach einem der vorhergehenden Ansprüche, **dadurch gekennzeichnet, dass** die Datenerfassung an den Messstellen (10, 20) unter Tage durchgeführt wird.

6. Erkundungsverfahren nach einem der vorhergehenden Ansprüche, **dadurch gekennzeichnet, dass** die Datenerfassung nach der Triggerung zur Erzeugung einer Messwertreihe für einen vorbestimmten Zeitraum andauert.

7. Erkundungsverfahren nach einem der vorhergehenden Ansprüche, **dadurch gekennzeichnet, dass** die an einer der Messstellen (10, 20) erfassten Daten in einem Speicher (17) der Messstelle (10, 20) zwischengespeichert werden.

8. Erkundungsverfahren nach den Ansprüchen 6 und 7, **dadurch gekennzeichnet, dass** eine oder mehrere Messwertreihen in dem Speicher (17) zwischengespeichert werden und anschließend an die Basisstation (50) übertragen werden.

9. Erkundungsverfahren nach einem der vorhergehenden Ansprüche, **dadurch gekennzeichnet, dass** zumindest eine der Messstellen (10, 20) Teil eines Geofonankers (3) ist.

10. Erkundungsvorrichtung (1) zur Registrierung seismischer Schwingungen, die umfasst:
- mehreren Messstellen (10, 20) zur Erfassung von Daten, welche die seismischen Schwingungen an den mehreren Messstellen (10, 20) wiedergeben,
- einer Basisstation (50) zur Triggerung der Datenerfassung an den Messstellen (10, 20),
**gekennzeichnet durch**
- einen drahtlosen ersten Übertragungsweg (11, 15, 53) von der Basisstation (50) direkt zu den Messstellen (10, 20) zur Triggerung der Datenerfassung, und
- einen zweiten Übertragungsweg (12, 18, 57) zur Übertragung der erfassten Daten an die Basisstation (50).

11. Erkundungsvorrichtung (1) nach Anspruch 10, **dadurch gekennzeichnet, dass** der erste Übertragungsweg (11, 15, 53) eine direkte analoge Funkverbindung zwischen einem direkt mit der Basisstation (50) verbundenen Sender und mehreren, direkt mit den Messstellen (10, 20) verbundenen Empfängern (15) umfasst, wobei einer der Empfänger (15) jeweils mit einer der Messstellen (10, 20) verbunden ist.

12. Erkundungsvorrichtung (1) nach Anspruch 10 oder 11, **dadurch gekennzeichnet, dass** der zweite Übertragungsweg (12, 18, 57) eine digitale Funkverbindung umfasst.

13. Erkundungsvorrichtung (1) nach einem der Ansprüche 10 bis 12, **dadurch gekennzeichnet, dass** der zweite Übertragungsweg ein zellulares Funknetz mit mindestens einer Vermittlungsstelle umfasst.

14. Erkundungsvorrichtung (1) nach einem der Ansprüche 10 bis 13, **dadurch gekennzeichnet, dass** die Messstellen (10, 20) unter Tage angeordnet sind.

15. Erkundungsvorrichtung (1) nach einem der Ansprüche 10 bis 14, **dadurch gekennzeichnet, dass** an zumindest einer der Messstellen (10, 20) ein mit der Messstelle (10, 20) verbundener Speicher (17) zur Zwischenspeicherung der erfassten Daten angeschlossen ist, so dass nach einer Triggerung zur Erzeugung einer Messwertreihe Daten für einen vorbestimmten Zeitraum erfasst und gespeichert werden können.

16. Erkundungsvorrichtung (1) nach Anspruch 15, **dadurch gekennzeichnet, dass** der Speicher (17) dazu eingerichtet ist, mehrere Messwertreihen zwischenzuspeichern.

17. Erkundungsvorrichtung (1) nach einem der Ansprüche 10 bis 16, **dadurch gekennzeichnet, dass** zumindest eine der Messstellen (10, 20) in einem Geofonanker (3) integriert ist.

18. Geofonanker (3), der umfasst:
- ein Geofon (20) zur Aufnahme seismischer Schwingungen,
- einen mit dem Geofon (20) verbundenen analogen Empfänger (15) zum Empfang eines Triggersignals, das den Beginn der Aufnahme der seismischen Schwingungen triggert,
- eine mit dem Geofon (20) verbundene digitale Einheit (16) zur Datenverarbeitung der aufgenommenen seismischen Schwingungen, um digitalisierte Messdaten zu erzeugen,
- einen mit der digitalen Einheit (16) verbundenen Speicher (17) zum Zwischenspeichern der digitalisierten Messdaten und
- einen mit dem Speicher (17) verbundenen Sender (18) zur Übertragung der digitalisierten Messdaten.
